# EUROPEAN PATENT SPECIFICATION

(11) **EP 2 075 707 B1**
(45) Date of publication and mention of the grant of the patent: **11.01.2012**
(21) Application number: 08019295.8
(22) Date of filing: 04.11.2008
(51) Int. Cl.: G06F 13/38

(54) **Method for transmitting audio streams and audio stream transmitting system thereof**
Verfahren zur Übertragung von Audioströmen und Audioströmungsübertragungssystem dafür
Procédé de transmission de flux audio et son système de transmission de flux audio

(30) Priority: 31.12.2007 TW 96151645
(43) Date of publication of application: 01.07.2009
(73) Proprietor: HTC Corporation, Taoyuan City Taoyuan County (TW)
(72) Inventor: Lai, Yu-Peng, Taoyuan City Taoyuan County (TW)
(74) Representative: Hager, Thomas Johannes

(56) References cited:
- EP-A1- 1 696 305
- US-A1- 2004 261 133
- US-A1- 2005 149 635
- US-A1- 2006 001 995
- US-B1- 6 745 264
- CYPRESS SEMICONDUCTOR: "Streaming Data Through Isochronous/Bulk Endpoints on EZ-USB FX2 and EZ-USB FX2LP" ANNOUNCEMENT CYPRESS SEMICONDUCTOR, CYPRESS SEMICONDUCTOR, US, 24 October 2005 (2005-10-24), pages 1-8, XP007908544
- CHUNG-PING YOUNG ET AL: "Universal Serial Bus Enhances Virtual Instrument-Based Distributed Power Monitoring", IEEE TRANSACTIONS ON INSTRUMENTATION AND MEASUREMENT, IEEE SERVICE CENTER, PISCATAWAY, NJ, US, vol. 50, no. 6, 1 December 2001 (2001-12-01), XP011025469, ISSN: 0018-9456

## Description

The present invention relates to a method and a related system for transmitting audio streams by utilizing a bulk transfer mode through a USB bus.

Because a Universal serial bus (USB) has the characteristics of ease of usage, good expansibility, support for plug-and-play, and high speed, the USB has become a common computer interface standard. Since being published in 1995, the operating speed of the USB has developed from 12Mbps to 480Mbps. Thus, users can find its application in many electronic products.

In the initial design stage of a USB, four transfer modes are defined in order to consider different characteristics of different peripherals. The four transfer modes are a control transfer mode, an interrupt transfer mode, a bulk transfer mode, and an isochronous transfer mode, respectively. The bulk transfer mode belongs to one-way or two-way transmission. As implied by the name, such type of transmission is used for transmitting a large number of data. Because the larger number of data has to be transmitted accurately, there is no restriction on a transfer rate (i.e., the transfer rate is not fixed) and no guarantee of a bandwidth and a delay time. On the other hand, the isochronous transfer mode must maintain a fixed transfer rate, thus minor errors are permitted. The isochronous transfer mode adopts a fixed bandwidth agreed with a host side in advance to ensure that the transfer rate at transmitters can match the transfer rate at receivers. In other words, data will not be re-transmitted even though errors occur during transmission. Transmitting devices utilizing such type of transmission include USB microphones, USB speakers, or digital video recorders (DVR), which should ensure a playback frequency or a transmitted image not to be distorted.

Users usually utilize the isochronous transfer mode of the USB bus to transmit audio streams to audio devices; however, not all devices can support the isochronous transfer mode. Under the conditions of not supporting the isochronous transfer mode, the following two techniques are adopted in the prior art. The first technique is to use different paths for respectively transmitting analog audio signals and USB data signals (D+, D-). Such a method requires an extra audio signal path for transmitting the audio streams, which is not economical as far as hardware design and cost are concerned. The second technique is to use the same path for transmitting both the analog audio signals and the USB data signals, and then it uses a switch for switching signals. This technique, however, cannot simultaneously support the USB peripherals and the audio devices.

US 2005149635 A1 discloses a task scheduling method, which can prevent overflowing of a buffer on a host system by transferring compressing audio data from a buffer of the host system to an external device with a first transfer priority. Noncompressed audio data is transferred from the buffer to the external device with a second transfer priority lower than the first transfer priority.

EP 1696305 A1 discloses data recording in a recording medium and data playback from the recording medium. A control unit allows supplying power to the recording/playback unit and disallows supplying power to a communication unit, which performs communication with a different information processing device. Furthermore, when the communication unit performs the communication, the control unit allows supplying the power to the communication unit and disallows supplying the power to the recording/playback unit.

US 2006001995 A1 discloses a recording and playback apparatus. Therein, a controller executes a test writing controlling process of controlling a recording and playback unit so that a test writing operation on a storage medium is executed according to a result of temperature detection by the temperature detector. The controller further executes a checking process of checking whether a signal has been correctly written by the test writing operation and a recording controlling process of controlling a recording operation on the storage medium by the recording and playback unit according to a result of the checking in the checking process.

Document *"*Universal Serial Bus Enhances Virtual Instrument-Based Distributed PowerMonitoring' written by Chung-Ping Young et all in IEEE transactions on instrumentation and measurement, vol. 50, no. 6 on December 1st. 2001 discloses an USB that links a distributed multicircuit power monitoring system to its virtual instrument (VI) host computer.

US 6745264 discloses an interface controller wherein a single FIFO stores non-isochronous data.

This in mind, the present invention aims at providing a method and a related audio stream transmitting system that transmits audio streams by utilizing a bulk transfer mode through a USB bus.

This is achieved by a method and a related audio stream transmitting system according to claims 1 and 7. The dependent claims pertain to corresponding further developments and improvements.

As will be seen more clearly from the detailed description following below, the claimed method includes providing a USB bus, and transmitting an audio stream through the USB bus by utilizing a bulk transfer mode. The method further includes providing a buffering module, buffering the audio stream in the buffering module to generate a buffered audio stream, performing a digital-to-analog conversion on the buffered audio stream to generate an analog playback signal, and performing an analog-to-digital conversion on an analog recording signal to generate the audio stream.

In addition, as will be seen more clearly from the detailed description following below, the claimed audio stream transmitting system includes a host, an audio stream control device, and a USB bus. The host has a host controller for transmitting or receiving an audio stream. The audio stream control device includes a serial interface controller for transmitting or receiving the audio stream. The USB bus is coupled between the host controller and the serial interface controller for transmitting the audio stream by utilizing a bulk transfer mode.

In one embodiment, the audio stream control device further includes a buffer, a DMA controller, and an audio codec. The buffer is coupled to the serial interface controller for buffering the audio stream to generate a buffered audio stream. The audio codec includes a digital-to-analog converter and an analog-to-digital converter.

In one embodiment, the audio stream transmitting system further includes a USB hub coupled between the host and the audio stream control device.

In the following, the invention is further illustrated by way of examples, taking reference to the accompanying drawings thereof.
FIG. is a diagram of an audio stream transmitting system according to a first embodiment of the present invention;
FIG.2 is a diagram of the circuit architecture of the audio stream control device shown in FIG.1;
FIG.3 shows a comparison table between the isochronous transfer mode and the bulk transfer mode of the USB bus;
FIG.4 is a flowchart illustrating a method for transmitting audio streams according to an exemplary embodiment of the present invention;
FIG.5 is a flowchart illustrating a method for transmitting audio streams according to another exemplary embodiment of the present invention; and
FIG.6 is a diagram of an audio stream transmitting system according to a second embodiment of the present invention.

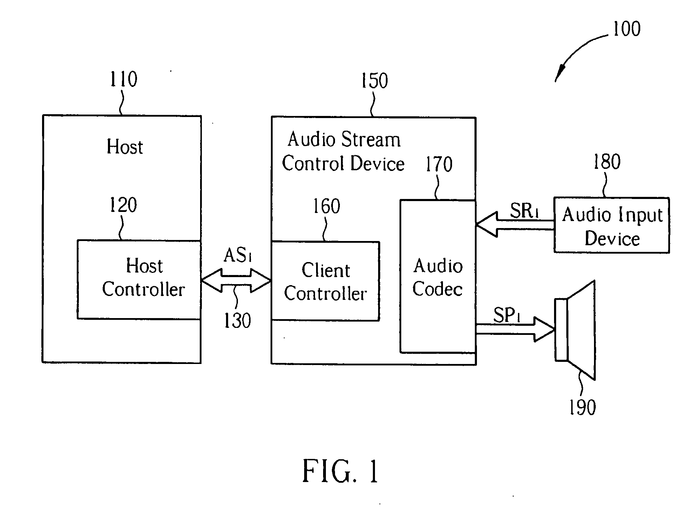

Please refer to FIG.1. FIG.1 is a diagram of an audio stream transmitting system 100 according to a first embodiment of the present invention. As shown in FIG.1, the audio stream transmitting system 100 includes a host 110, an audio stream control device 150, a USB bus 130, an audio input device 180, and an audio output device 190. The host 110 has a host controller 120 for transmitting or receiving an audio stream AS₁. The audio stream control device 150 includes a client controller 160 and an audio codec 170, wherein the client controller 160 is used for transmitting or receiving the audio stream AS₁. and the audio codec 170 is used for performing a digital-to-analog conversion or an analog-to-digital conversion. The USB bus 130 is coupled between the host controller 120 and the client controller 160 for transmitting the audio stream AS₁ by utilizing a bulk transfer mode.

Furthermore, the audio input device 180 is coupled to the audio codec 1 70 of the audio stream control device 1 50 for generating an analog recording signal SR₁ to the audio codec 170. The audio output device 190 is also coupled to the audio codec 170 for receiving and playing an analog playback signal SP₁. The circuit architecture and operations of each element of the audio stream transmitting system 100 will be further detailed in the following embodiments.

Please note that the aforementioned host 110 can be a desktop computer, a notebook computer, a mobile phone, or a personal digital assistant (PDA). But the host 110 is not merely limited to the above device, and can be other types of host devices. In one embodiment, the audio input device 180 can be a microphone; but this is presented merely for illustrating practicable designs of the present invention, and should not be construed as a limitation of the present invention. In addition, the audio output device 190 can be a speaker; but it is not limited to that only, and can be other types of audio output elements. Please also note that the aforementioned audio stream As₁ can be a digital signal, and the analog recording signal SR₁ and the analog playback signal SP₁ are each an analog signal.

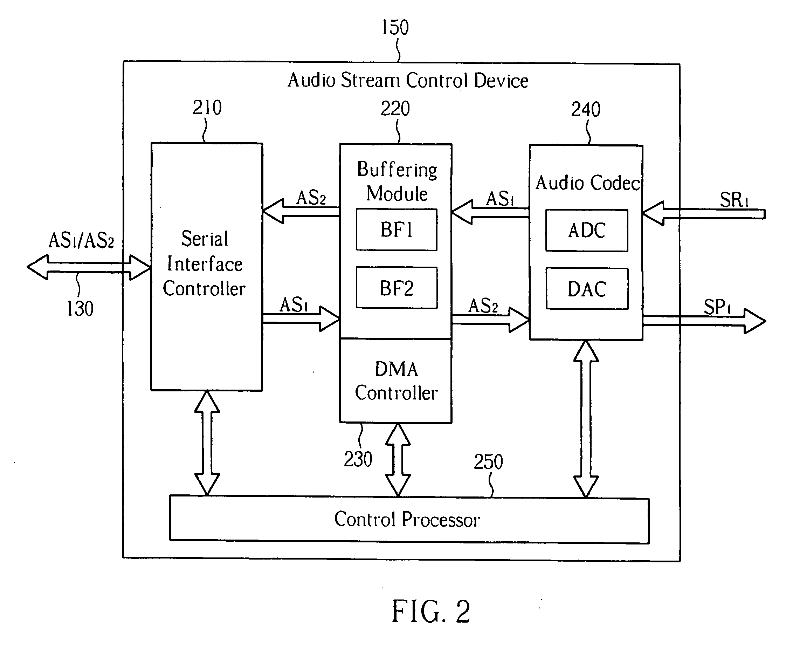

Please refer to FIG.2. FIG.2 is a diagram of the circuit architecture of the audio stream control device 150 shown in FIG.1. In this embodiment, the audio stream control device 150 includes, but is not limited to, a serial interface controller 210, a buffering module 220, and a direct memory access (DMA) controller 230, an audio codec 240, and a control processor 250. The buffering module 220 is coupled between the serial interface controller 210 and the audio codec 240, and has a first buffer BF1 and a second buffer BF2 for respectively storing the audio stream AS₁ on the recording path and the playback path to generate a buffered audio stream AS₂. The DMA controller 230 is coupled to the buffering module 220 for controlling readings and writings of the buffering module 220. The audio codec 240 includes an analog-to-digital converter ADC and a digital-to-analog converter DAC. The analog-to-digital converter ADC is coupled between the first buffer BF1 of the buffering module 220 and the audio input device 180 (please also refer to FIG.1) for receiving the analog recording signal SR₁ and for performing an analog-to-digital conversion on the analog recording signal SR₁ to generate the audio stream AS₁. The digital-to-analog converter DAC is coupled between the second buffer BF2 of the buffering module 220 and the audio output device 190 (please also refer to FIG.1) for performing a digital-to-analog conversion on the buffered audio stream AS₂ to generate the analog playback signal SP₁. In addition, the serial interface controller 210 is coupled to the buffering module 220 for transmitting or receiving the audio stream AS₁ (or the buffered audio stream AS₂) through the USB bus 130 by utilizing a bulk transfer mode. The control processor 250 is coupled to the serial interface controller 210, the DMA controller 230, and the audio codec 240 for controlling settings and operations of these elements.

Please keep referring to FIG.2 and FIG.1. On the recording path, the analog-to-digital converter ADC of the audio codec 240 receives the analog recording signal SR₁ from the audio input device 180, and transforms it into the audio stream AS₁. The audio stream AS₁ is then stored in the first buffer BF1 to generate the buffered audio stream AS₂ to the serial interface controller 210. Finally, the buffered audio stream AS₂ is transmitted through the USB bus 130 by utilizing the bulk transfer mode to the host 110. On the playback path, the host 100 transmits the audio stream AS₁ to the serial interface controller 210 through the USB bus 130 by utilizing the bulk transfer mode. The audio stream AS₁ is then stored in the second buffer BF2 to generate the buffered audio stream AS₂ to the digital-to-analog converter DAC of the audio codec 240. The buffered audio stream AS₂ is then transformed into the analog playback signal SP₁. Finally, the analog playback signal SP₁ is transmitted to the audio output device 190 to be played.

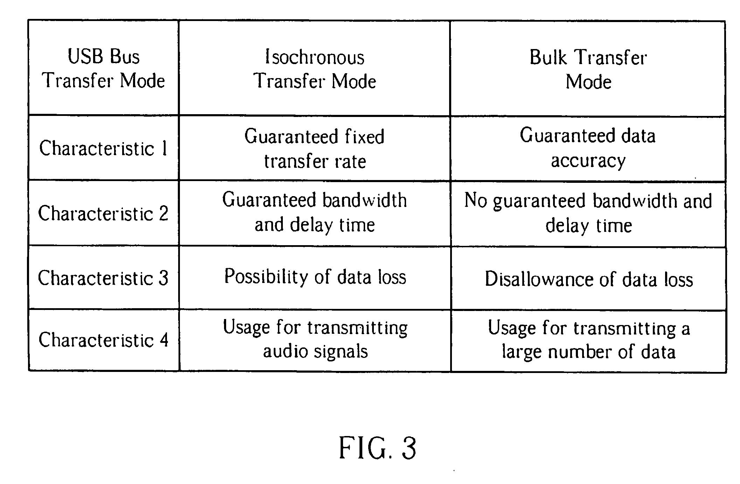

Please refer to FIG.3. FIG.3 shows a comparison table between the isochronous transfer mode and the bulk transfer mode of the USB bus. As can be seen from FIG.3, the isochronous transfer mode has the characteristics of guaranteed fixed transfer rate, guaranteed bandwidth and delay time, possibility of data loss, and usage for transmitting audio signals. On the other hand, the bulk transfer mode has the characteristics of guaranteed data accuracy, no guaranteed bandwidth and delay time, disallowance of data loss, and usage for transmitting a large number of data.

Please note that, because the isochronous transfer mode and the bulk transfer mode of the USB bus have different characteristics, functions of some elements must be especially enhanced to improve the transmitting efficiency of audio streams when designing the audio stream control device 150. For example, because the bulk transfer mode does not guarantee the bandwidth and delay time, capacities of the first buffer BF1 and the second buffer BF2 of the buffering module 220 must be increased to overcome such problems. In addition, because the bulk transfer mode must guarantee data accuracy, the DMA controller 230 must ensure validity of the audio stream AS_{1/}buffered audio stream AS₂. Furthermore, because the bulk transfer mode does not allow data loss, the control processor 250 must control the serial interface controller 210 and the DMA controller 230 when retransmitting data. All the abovementioned characteristics for transmitting audio signals are different from those of the isochronous transfer mode of the USB bus.

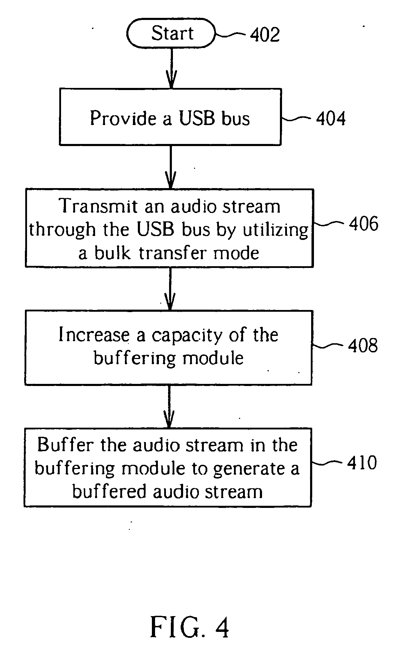

Please refer to FIG.4. FIG.4 is a flowchart illustrating a method for transmitting audio streams according to an exemplary embodiment of the present invention. Please note that the following steps do not need to be performed according to the exact sequence shown in FIG.4 if a substantially identical result can be obtained. The method includes the following steps:
Step 402: Start.
Step 404: Provide a USB bus.
Step 406: Transmit an audio stream through the USB bus by utilizing a bulk transfer mode.
Step 408: Increase a capacity of the buffering module.
Step 410: Buffer the audio stream in the buffering module to generate a buffered audio stream.

The operation of each element can be known by collocating the steps shown in FIG.4 and the elements shown in FIG.1 and FIG.2. Further description of the operations of each step shown in FIG.4 is therefore omitted here for brevity. It should be noted that the steps of the flowchart mentioned above are merely a practicable embodiment of the present invention, and should not be taken as a limitation of the present invention. The method can include other intermediate steps or can merge several steps into a single step without departing from the spirit of the present invention.

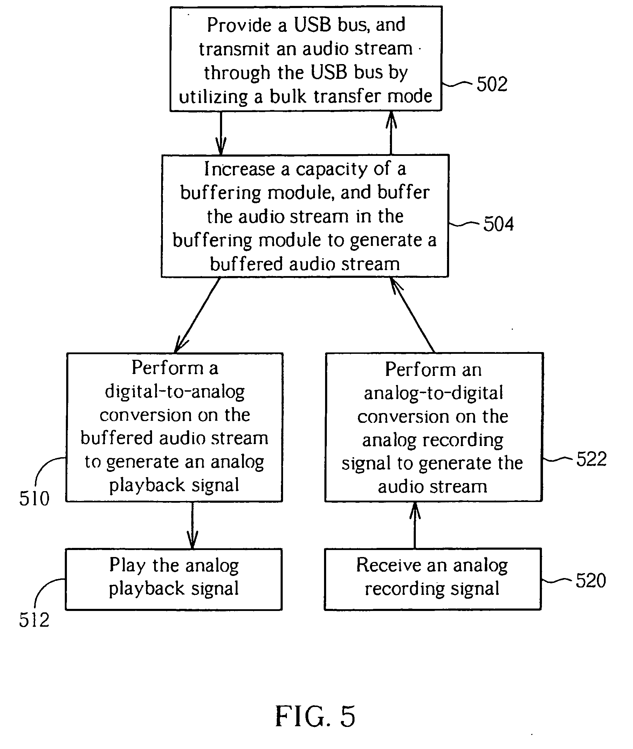

Please refer to FIG.5. FIG.5 is a flowchart illustrating a method for transmitting audio streams according to another exemplary embodiment of the present invention. Please note that the following steps do not need to be performed according to the exact sequence shown in FIG.5 if a substantially identical result can be obtained. The method includes the following steps:
Step 502: Provide a USB bus, and transmit an audio stream through the USB bus by utilizing a bulk transfer mode.
Step 504: Increase a capacity of a buffering module, and buffer the audio stream in the buffering module to generate a buffered audio stream.
Step 510: Perform a digital-to-analog conversion on the buffered audio stream to generate an analog playback signal.
Step 512: Play the analog playback signal.
Step 520: Receive an analog recording signal.
Step 522: Perform an analog-to-digital conversion on the analog recording signal to generate the audio stream.

Please note that the steps in FIG.5 are similar to those in FIG.4. FIG. 5 is a varied embodiment of the flowchart shown in FIG.4. The difference between the two flowcharts is stated in the following. Step 502 in FIG.5 is formed by merging the steps 404 and 406 in FIG.4, and Step 504 in FIG.5 is formed by merging the steps 408 and 410 in FIG.4. In addition, the steps in FIG.5 can be further divided into two parts, wherein the first part describes the playback path (please refer to the Steps 502, 504, 510, and 512 in this order), and the second part describes the recording path (please refer to the Steps 520, 522, 504, and 502 in this order). The following description details how each element operates by collocating the steps shown in FIG.5 and the elements shown in FIG.1 and FIG.2.

For the playback path, the USB bus 130 is first provided, and the audio stream ASi is transmitted through the USB bus 130 by utilizing the bulk transfer mode (Step 502). The capacity of the second buffer BF2 is increased, and the audio stream **AS₁** is buffered in the second buffer BF2 to generate the buffered audio stream AS₂ to the digital-to-analog converter DAC of the audio codec 240 (Step 504). Afterwards, the digital-to-analog converter DAC performs a digital-to-analog conversion on the buffered audio stream AS₂ to generate the analog playback signal SP₁ (Step 510). Finally, the audio output device 190 plays the analog playback signal SP₁ (Step 512). As for the recording path, the analog-to-digital converter ADC of the audio codec 240 first receives the analog recording signal SR₁ from the audio input device 180 (Step 520). The analog-to-digital converter ADC then performs an anatog-to-digital conversion on the analog recording signal SR₁ to generate the audio stream AS₁ (Step 522). Afterwards, the capacity of the first buffer BF1 is increased, and the audio stream AS₁ is buffered in the first buffer BF1 to generate the buffered audio stream AS₂ to the serial interface controller 210 (Step 504). Finally, the UBS bus 130 is provided, and the buffered audio stream AS₂ is transmitted through the USB bus 130 by utilizing the bulk transfer mode (Step 502).

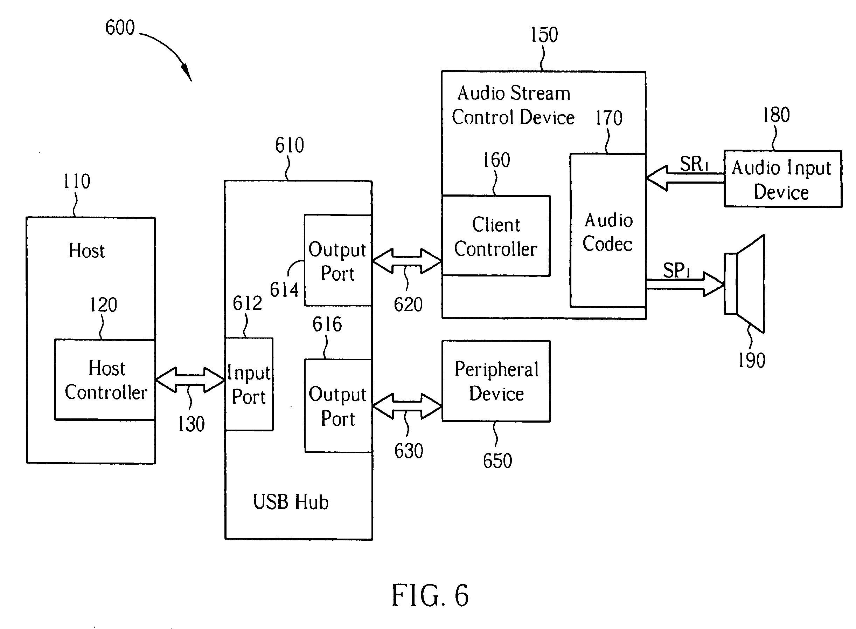

Of course, the audio stream transmitting system 100 shown in FIG.1 is merely an embodiment of the present invention, and, as is well known by persons of ordinary skill in the art, suitable variations can be applied to the audio stream transmitting system 100. Please refer to FIG.6. FIG.6 is a diagram of an audio stream transmitting system 600 according to a second embodiment of the present invention. FIG. 6 is a varied embodiment of the audio stream transmitting system 100 shown in FIG.1. The architecture of the audio stream transmitting system 600 shown in FIG.6 is similar to that in FIG.1, and the difference between them is that the audio stream transmitting system 600 further includes a USB hub 610 having an input port 612 and a plurality of output ports 614 and 616. The USB hub 610 is used for expanding the USB bus 130 to a plurality of USB buses 620 and 630 (in this embodiment, only two USB buses 620 and 630 are shown). Thus, the USB bus 620 can be used for connecting the audio stream control device 150 (for transmitting audio signals), and the other USB bus 630 can be used for connecting a peripheral device 650 (for transmitting USB data signals). Therefore, the USB buses can be used for simultaneously transmitting the audio signals and the USB data signals without the need for extra paths.

Please note that the peripheral device 650 mentioned above can be a USB peripheral, and its number is not limited. In addition, a number of the output ports of the USB hub 610 is not limited. Those skilled in the art should appreciate that various modifications of the audio stream transmitting systems 100 and 600 in FIG.1 and FIG.6 and the audio stream control device 150 in FIG.2 may be made without departing from the spirit of the present invention.

The abovementioned embodiments are presented merely for describing the present invention, and in no way should be considered to be limitations of the scope of the present invention. From the above descriptions, the present invention provides a method for transmitting audio streams and a related audio stream transmitting system. Through utilizing the bulk transfer mode of the USB bus to transmit audio streams to audio devices, not only are no extra paths needed to transmit the audio streams, but also can support both the USB peripherals and the audio devices simultaneously. Therefore, cost can be effectively controlled, and hardware designs are very simple. Furthermore, through increasing the capacity of the buffering module, more audio streams can be stored in the buffering module to overcome problems resulting from no guaranteed bandwidth and delay time in the bulk transfer mode. As a result, the efficiency for transmitting the audio streams can be further improved.

All combinations and sub-combinations of above-described features also belong to the invention.

## Claims

1. A method for transmitting audio streams, comprising:
providing a USB bus (130); and
**characterized by**:
providing a buffering module (220);
receiving a first audio stream (AS₁) from a host (110) through the USB bus (130) by utilizing the bulk transfer mode, increasing a capacity of the buffering module (220) and then buffering the first audio stream (AS₁) in the buffering module (220) to generate the first buffered audio stream (AS₂); and
buffering a second audio stream (AS₁) in the buffering module (220) to generate a second buffered audio stream (AS₂), and then transmitting the second buffered audio stream (AS₂) to the host (110) through the USB bus (130) by utilizing a bulk transfer mode;
wherein data accuracy of the first audio stream(AS1), the first buffered audio stream (AS2), the second audio stream(AS1), and the second buffered audio stream (AS2)are guaranteed.

2. The method of claim 1, **characterized by**:
controlling readings and writings of the buffering module (220) by a direct memory access (DMA) controller (230).

3. The method of claim 1, **characterized by**:
performing a digital-to-analog conversion on the first buffered audio stream (AS₂) to generate an analog playback signal (SP₁).

4. The method of claim 1, **characterized by**:
receiving an analog recording signal (SR₁); and
performing an analog-to-digital conversion on the analog recording signal (SR₁) to generate the second audio stream (AS₁).

5. The method of claim 1, **characterized by**:
expanding the USB bus (130) to a plurality of USB buses (620, 630).

6. An audio stream transmitting system (100, 600), comprising:
a host (110), having a host controller (120), for transmitting a first audio stream (AS₁) or for receiving a second buffered audio stream (AS₂);
a USB bus (130), coupled to the host controller (120), for transmitting the first audio stream (AS₁) and the second buffered audio stream (AS₂) by utilizing a bulk transfer mode; and
**characterized by**:
an audio stream control device (150), comprising:
a serial interface controller (210), coupled to the USB bus (130), for receiving the first audio stream (AS₁) from the host (110) through the USB bus(130) by utilizing the bulk transfer mode, and for transmitting the second buffered audio stream (AS₂) to the host (110) through the USB bus (130) by utilizing the bulk transfer mode; and
a buffering module (220), coupled to the serial interface controller (210);
wherein after the serial interface controller (210) receives the first audio stream (AS₁) from the host (110) through the USB bus (130), a capacity of the buffering module (220) is increased and the buffering module (220) buffers the first audio stream (AS₁) to generate the first buffered audio stream (AS₂); and after the buffering module (220) buffers the second audio stream (AS₁) to generate the second buffered audio stream (AS₂), the serial interface controller (210) transmits the second buffered audio stream (AS₂) to the host (110) through the USB bus (130) ;
wherein data accuracy of the first audio stream(AS₁), the first buffered audio stream (AS₂), the second audio stream(AS₁), and the second buffered audio stream (AS₂) are guaranteed.

7. The audio stream transmitting system (100, 600) of claim 6, **characterized in that** the audio stream control device (150) further comprises:
a DMA controller (230), coupled to the buffering module (220), for controlling readings and writings of the buffering module (220).

8. The audio stream transmitting system (100, 600) of claim 6, **characterized in that** the audio stream control device (150) further comprises:
an audio codec (170, 240), comprising:
a digital-to-analog converter (DAC), coupled to the buffering module (220), for performing a digital-to-analog conversion on the first buffered audio stream (AS₂) to generate an analog playback signal (SP₁); and
an analog-to-digital converter (ADC), coupled to the buffering module (220), for receiving and performing an analog-to-digital conversion on the analog recording signal (SR₁) to generate the second audio stream (AS₁).

9. The audio stream transmitting system (100, 600) of claim 8, **characterized in that** the audio stream control device (150) further comprises:
a control processor (250), coupled to the serial interface controller (210), the DMA controller (230), and the audio codec (170, 240), for controlling settings and operations of the serial interface controller (210), the DMA controller (230), and the audio codec (170,240).

10. The audio stream transmitting system (100, 600) of claim 8, **characterized by**:
a speaker (190), coupled to the digital-to-analog converter (DAC), for receiving and playing the analog playback signal (SP₁); and
a microphone (180), coupled to the analog-to-digital converter (ADC), for generating the analog recording signal (SR₁).

11. The audio stream transmitting system (100, 600) of claim 6, **characterized by**:
a USB hub (610), coupled between the host (110) and the audio stream control device (150), for expanding the USB bus (130) to a plurality of USB buses (620, 630).

## Patentansprüche

1. Verfahren zum Übertragen von Audio-Streams, umfassend:
Bereitstellen eines USB-Busses (130); und
**gekennzeichnet durch**:
Bereitstellen eines Zwischenspeichermoduls (220);
Empfangen eines ersten Audio-Streams (AS₁) von einem Hauptrechner (110) über den USB-Bus (130) **durch** Verwenden eines abschnittsweisen Transfermodus, Erhöhen einer Kapazität des Zwischenspeichermoduls (220) und dann Zwischenspeichern des ersten Audio-Streams (AS₁) in dem Zwischenspeichermodul (220), um einen ersten zwischengespeicherten Audio-Stream (AS₂) zu erzeugen; und
Zwischenspeichern eines zweiten Audio-Streams (AS₁) in dem Zwischenspeichermodul (220), um einen zweiten zwischengespeicherten Audio-Stream (AS₂) zu erzeugen, und dann Übertragen des zweiten zwischengespeicherten Audio-Streams (AS₂) zum Hauptrechner (110) über den USB-Bus (130) **durch** Verwenden eines abschnittsweisen Transfermodus;
wobei die Datengenauigkeit des ersten Audio-Streams (AS₁), des ersten zwischengespeicherten Audio-Streams (AS₂), des zweiten Audio-Streams (AS₁) und des zweiten zwischengespeicherten Audio-Streams (AS₂) garantiert ist.

2. Verfahren nach Anspruch 1, **gekennzeichnet durch**:
Steuern der Lese- und Schreibvorgänge des Zwischenspeichermoduls (220) durch eine Direktspeicherzugriffs-(DMA) Steuerung (230).

3. Verfahren nach Anspruch 1, **gekennzeichnet durch**:
Durchführen einer Digital-Analog-Umwandlung am ersten zwischengespeicherten Audio-Stream (AS₂), um ein analoges Wiedergabesignal (SP₁) zu erzeugen.

4. Verfahren nach Anspruch 1, **gekennzeichnet durch**:
Empfangen eines analogen Aufzeichnungssignals (SR₁); und
Durchführen einer Analog-Digital-Umwandlung am analogen Aufzeichnungssignal (SR₁), um den zweiten Audio-Stream (AS₁) zu erzeugen.

5. Verfahren nach Anspruch 1, **gekennzeichnet durch**:
Erweitern des USB-Busses (130) auf eine Vielzahl von USB-Bussen (620, 630).

6. System (100, 600) zum Übertragen von Audio-Streams, umfassend:
einen Hauptrechner (110) mit einer Hauptsteuerung (120) zum Übertragen eines ersten Audio-Streams (AS₁) oder zum Empfangen eines zweiten zwischengespeicherten Audio-Streams (AS₂);
einen USB-Bus (130), der mit der Hauptsteuerung (120) verbunden ist, um den ersten Audio-Stream (AS₁) und den zweiten zwischengespeicherten Audio-Stream (AS₂) durch Verwenden eines abschnittsweisen Transfermodus zu übertragen; und
**gekennzeichnet durch**:
eine Audio-Stream-Steuervorrichtung (150), umfassend:
eine serielle Schnittstellensteuerung (210), die mit dem USB-Bus (130) verbunden ist, um den ersten Audio-Stream (AS₁) vom Hauptrechner (110) über den USB-Bus (130) **durch** Verwenden des abschnittsweisen Transfermodus zu empfangen, und zum Übertragen des zweiten zwischengespeicherten Audio-Streams (AS₂) zum Hauptrechner (110) über den USB-Bus (130) **durch** Verwenden des abschnittsweisen Transfermodus; und
ein Zwischenspeichermodul (220), das mit der seriellen Schnittstellensteuerung (210) verbunden ist,
wobei, nachdem die serielle Schnittstellensteuerung (210) den ersten Audio-Stream (AS₁) vom Hauptrechner (110) über den USB-Bus (130) empfangen hat, eine Kapazität des Zwischenspeichermoduls (220) erhöht ist und das Zwischenspeichermodul (220) den ersten Audio-Stream (AS₁) zwischenspeichert, um den ersten zwischengespeicherten Audio-Stream (AS₂) zu erzeugen; und nachdem das Zwischenspeichermodul (220) den zweiten Audio-Stream (AS₁) zwischengespeichert hat, um den zweiten zwischengespeicherten Audio-Stream (AS₂) zu erzeugen, die serielle Schnittstellensteuerung (210) den zweiten zwischengespeicherten Audio-Stream (AS₂) über den USB-Bus (130) zum Hauptrechner (110) überträgt;
wobei die Datengenauigkeit des ersten Audio-Streams (AS₁), des ersten zwischengespeicherten Audio-Streams (AS₂), des zweiten Audio-Streams (AS₁) und des zweiten zwischengespeicherten Audio-Streams (AS₂) garantiert ist.

7. System (100, 600) zum Übertragen eines Audio-Streams nach Anspruch 6, **dadurch gekennzeichnet, dass** die Audio-Stream-Steuervorrichtung (150) ferner umfasst:
eine DMA-Steuerung (230), die mit dem Zwischenspeichermodul (220) verbunden ist, um die Lese- und Schreibvorgänge des Zwischenspeichermoduls (220) zu steuern.

8. System (100, 600) zum Übertragen eines Audio-Streams nach Anspruch 6, **dadurch gekennzeichnet, dass** die Audio-Stream-Steuervorrichtung (150) ferner umfasst:
einen Audio-Codec (170, 240), umfassend:
einen Digital-Analog-Wandler (DAC), der mit dem Zwischenspeichermodul (220) verbunden ist, um eine Digital-Analog-Umwandlung am ersten zwischengespeicherten Audio-Stream (AS₂) durchzuführen, um ein analoges Wiedergabesignal (SP₁) zu erzeugen; und
einen Analog-Digital-Wandler (ADC), der mit dem Zwischenspeichermodul (220) verbunden ist, zum Empfangen eines analogen Aufzeichnungssignals (SR₁) und Durchführen einer Analog-Digital-Umwandlung an diesem, um den zweiten Audio-Stream (AS₁) zu erzeugen.

9. System (100, 600) zum Übertragen eines Audio-Streams nach Anspruch 8, **dadurch gekennzeichnet, dass** die Audio-Stream-Steuervorrichtung (150) ferner umfasst:
einen Steuerprozessor (250), der mit der seriellen Schnittstellensteuerung (210), der DMA-Steuerung (230) und dem Audio-Codec (170, 240) verbunden ist, um die Einstellungen und Funktionen der seriellen Schnittstellensteuerung (210), der DMA-Steuerung (230) und des Audio-Codec (170, 240) zu steuern.

10. System (100, 600) zum Übertragen eines Audio-Streams nach Anspruch 8, **gekennzeichnet durch**:
einen Lautsprecher (190), der mit dem Digital-Analog-Wandler (DAC) verbunden ist, um das analoge Wiedergabesignal (SP₁) zu empfangen und auszugeben; und
ein Mikrofon (180), das mit dem Analog-Digital-Wandler (ADC) verbunden ist, um das analoge Aufzeichnungssignal (SR₁) zu erzeugen.

11. System (100, 600) zum Übertragen eines Audio-Streams nach Anspruch 6, **gekennzeichnet durch**:
einen USB-Hub (610), der zwischen den Hauptrechner (110) und die Audio-Stream-Steuervorrichtung (150) geschaltet ist, um den USB-Bus (130) auf eine Vielzahl von USB-Bussen (620, 630) zu erweitern.

## Revendications

1. Procédé destiné à transmettre des flux audit, comprenant l'étape ci-dessous consistant à :
fournir un bus USB (130) ; et
**caractérisé par** les étapes ci-dessous consistant à :
fournir un module de mise en mémoire tampon (220) ;
recevoir un premier flux audio (AS₁) à partir d'un hôte (110) à travers le bus USB (130) en utilisant le mode de transfert en volume, augmenter une capacité du module de mise en mémoire tampon (220) et mettre ensuite en mémoire tampon le premier flux audio (AS₁) dans le module de mise en mémoire tampon (220) en vue de générer le premier flux audio mis en mémoire tampon (AS₂) ; et
mettre en mémoire tampon un second flux audio (AS₁) dans le module de mise en mémoire tampon (220) en vue de générer un second flux audio mis en mémoire tampon (AS₂), et transmettre ensuite le second flux audio mis en mémoire tampon (AS₂) à l'hôte (110) via le bus USB (130) en utilisant un mode de transfert en volume ;
dans lequel la précision des données du premier flux audio (AS₁), du premier flux audio mis en mémoire tampon (AS₂), du second flux audio (AS₁), et du second flux audio mis en mémoire tampon (AS₂) est garantie.

2. Procédé selon la revendication 1, **caractérisé par** l'étape ci-dessous consistant à :
commander les lectures et écritures du module de mise en mémoire tampon (220) par le biais d'un contrôleur d'accès direct en mémoire (DMA) (230).

3. Procédé selon la revendication 1, **caractérisé par** l'étape ci-dessous consistant à :
mettre en oeuvre une conversion numérique à analogique sur le premier flux audio mis en mémoire tampon (AS₂) en vue de générer un signal de lecture analogique (SP₁).

4. Procédé selon la revendication 1, **caractérisé par** les étapes ci-dessous consistant à :
recevoir un signal d'enregistrement analogique (SR₁) ;
mettre en oeuvre une conversion analogique à numérique sur le signal d'enregistrement analogique (SR₁) en vue de générer le second flux audio (AS₁).

5. Procédé selon la revendication 1, **caractérisé par** l'étape ci-dessous consistant à:
étendre le bus USB (130) à une pluralité de bus USB (620, 630).

6. Système de transmission de flux audio (100, 600), comprenant :
un hôte (110), présentant un contrôleur hôte (120), pour transmettre un premier flux audio (AS₁) ou pour recevoir un second flux audio mis en mémoire tampon (AS₂) ;
un bus USB (130), couplé au contrôleur hôte (120), pour transmettre le premier flux audio (AS₁) et le second flux audio mis en mémoire tampon (AS₂) en utilisant un mode de transfert en volume ; et **caractérisé par** :
un dispositif de commande de flux audio (150), comprenant :
un contrôleur d'interface série (210), couplé au bus USB (130), pour recevoir le premier flux audio (AS₁) à partir de l'hôte (110) à travers le bus USB (130), en utilisant le mode de transfert en volume, et pour transmettre le second flux audio mis en mémoire tampon (AS₂) à l'hôte (110) par le biais du bus USB (130), en utilisant le mode de transfert en volume ; et
un module de mise en mémoire tampon (220), couplé au contrôleur d'interface série (210) ;
dans lequel dès lors que le contrôleur d'interface série (210) a reçu le premier flux audio (AS₁) à partir de l'hôte (110) à travers le bus USB (130), une capacité du module de mise en mémoire tampon (220) est augmentée et le module de mise en mémoire tampon (220) met en mémoire tampon le premier flux audio (AS₁) en vue de générer le premier flux audio mis en mémoire tampon (AS₂), et dès lors que le module de mise en mémoire tampon (220) a mis en mémoire tampon le second flux audio (AS₁), en vue de générer le second flux audio mis en mémoire tampon (AS₂), le contrôleur d'interface série (210) transmet le second flux audio mis en mémoire tampon (AS₂) à l'hôte (110) à travers le bus USB (130) ;
dans lequel la précision des données du premier flux audio (AS₁), du premier flux audio mis en mémoire tampon (AS₂), du second flux audio (AS₁), et du second flux audio mis en mémoire tampon (AS₂) est garantie.

7. Système de transmission de flux audio (100, 600) selon la revendication 6, **caractérisé en ce que** le dispositif de commande de flux audio (150) comprend en outre :
un contrôleur d'accès DMA (230), couplé au module de mise en mémoire tampon (220), pour commander les lectures et les écritures du module de mise en mémoire tampon (220).

8. Système de transmission de flux audio (100, 600) selon la revendication 6, **caractérisé en ce que** le dispositif de commande de flux audio (150) comprend en outre :
un codec audio (170, 240), comprenant :
un convertisseur numérique à analogique (DAC), couplé au module de mise en mémoire tampon (220), pour mettre en oeuvre une conversion numérique à analogique sur le premier flux audio mis en mémoire tampon (AS₂) en vue de générer un signal de lecture analogique (SP₁) ; et
un convertisseur analogique à numérique (ADC), couplé au module de mise en mémoire tampon (220), pour recevoir et mettre en oeuvre une conversion analogique à numérique sur le signal d'enregistrement analogique (SR₁) en vue de générer le second flux audio (AS₁).

9. Système de transmission de flux audio (100, 600) selon la revendication 8, **caractérisé en ce que** le dispositif de commande de flux audio (150) comprend en outre :
un processeur de commande (250), couplé au contrôleur d'interface série (210), au contrôleur d'accès DMA (230), et au codec audio (170, 240), en vue de commander les paramètres et les opérations du contrôleur d'interface série (210), du contrôleur d'accès DMA (230), et du codec audio (170, 240).

10. Système de transmission de flux audio (100, 600) selon la revendication 8, **caractérisé par** :
un haut-parleur (190), couplé au convertisseur numérique à analogique (DAC), pour recevoir et lire le signal de lecture analogique (SP₁) ; et
un microphone (180), couplé au convertisseur analogique à numérique (ADC), pour générer le signal d'enregistrement analogique (SR₁).

11. Système de transmission de flux audio (100, 600) selon la revendication 6, **caractérisé par** :
un concentrateur USB (610), couplé entre l'hôte (110) et le dispositif de commande de flux audio (150), pour étendre le bus USB (130) à une pluralité de bus USB (620, 630).
